# EUROPÄISCHE PATENTSCHRIFT

(11) **EP 1 740 779 B1**
(45) Veröffentlichungstag und Bekanntmachung des Hinweises auf die Patenterteilung: **15.08.2007**
(21) Anmeldenummer: 05771401.6
(22) Anmeldetag: 22.06.2005
(51) Int. Cl.: E03C 1/08

(54) **SANITÄRKOMPONENTE, NÄMLICH STRAHLREGLER ODER STRAHLFORMER FÜR STRÖMENDE, FLUIDE MEDIEN, VERFAHREN ZUR HERSTELLUNG EINER DERARTIGEN SANITÄRKOMPONENTE SOWIE VERWENDUNG EINER SANITÄRKOMPONENTE**
SANITARY COMPONENT, NAMELY JET REGULATOR OR JET FORMER FOR FLOWING, FLUID MEDIA, METHOD OF PRODUCING SUCH A SANITARY COMPONENT AND USE OF A SANITARY COMPONENT
COMPOSANT SANITAIRE, NOTAMMENT DISPOSITIF DE REGULATION DE JET OU DE FORMATION DE JET POUR MILIEU D'ECOULEMENT, PROCEDE DE FABRICATION D'UN TEL COMPOSANT SANITAIRE ET UTILISATION D'UN COMPOSANT SANITAIRE

(30) Priorität: 18.05.2005 DE 102005022841
(43) Veröffentlichungstag der Anmeldung: 10.01.2007
(73) Patentinhaber: Neoperl Gmbh, 79379 Müllheim (DE)
(72) Erfinder: DENZLER, Oliver, CH-4103 Bottmingen (CH)
(74) Vertreter: Kruspig, Volkmar
(86) Internationale Anmeldenummer: PCT/EP2005/006756
(87) Internationale Veröffentlichungsnummer: WO 2006/122579

(56) Entgegenhaltungen:
- EP-A- 1 308 563
- WO-A-97/32244
- DE-U1- 20 010 101

## Beschreibung

Die Erfindung betrifft eine Sanitärkomponente, nämlich Strahlregler oder Strahlformer für strömende fluide Medien, bestehend aus in Strömungsrichtung sandwichartig angeordneten eigenschaftsbestimmenden Bauteilen, ein Verfahren zur Herstellung einer derartigen Sanitärkomponente sowie eine Verwendung von Sanitärkomponenten, nämlich Strahlreglern oder Strahlformern. Eine Sanitärkomponente, welche die Merkmale des Oberbegriffes des Anspruchs 1 aufweist, ist aus der DE-U-200 10 101 bekannt.

Strahlregler oder Strahlformer, die von der Firma Neoperl GmbH unter dem Markennamen "Neoperl^{®}" oder "Perlator^{®}" angeboten werden, gehören seit vielen Jahren zum Stand der Technik.

Dabei ist gemäß verschiedener Standards, z.B. dem europäischen Standard EN 246 oder dem US-Standard ASME A112.18.1M eine Vielzahl von verschiedenen Produkten unterschiedlicher Durchflußraten oder mit einer Durchflußratenbegrenzung vorrätig zu halten. Weiterhin werden einerseits Strahlformen mit Luftbeimischung als sogenannter perlender Strahl, andererseits aber auch laminare, glasklare Strömungen fluider Medien gewünscht, wobei es ebenso gilt, die Geräuschemission, die beim Austreten des Strahls entsteht, zu beeinflussen. Die vorstehenden Anforderungen erhöhen die Anzahl unterschiedlicher Produkte, die an sich demselben Zweck dienen, nochmals.

Die wesentlichsten Bauteile von Strahlreglern bzw. Strahlformern für strömende fluide Medien umfassen in Strömungsrichtung sandwichartig angeordnete Mittel, nämlich im Regelfall ein kreisförmiges Vorsatzsieb, eine kreisförmige zerlegerplattenanordnung sowie einen im wesentlichen zylindrischen Hülsenkörper mit über seiner Querschnittsfläche verlaufenden strahlformenden, Durchbrechungen aufweisenden Segmenten, welche einstückig mit der Hülse und/oder als Einlegeplatten ausgeführt sein können.

Die Vorsatz- oder Filtersiebe, die Strahlreglern, Durchflußmengenreglern, Durchflußbegrenzern und/oder Rückflußverhinderern in Strömungsrichtung vorgeschaltet sind, schützen die sanitären Einsatzteile gegen die im Wasser mitgeführten Schmutzpartikel. Die Vorsatzsiebe sind im Regelfall mit den weiteren Baugruppen verbunden und werden als zusammengehörige Funktionseinheit in ein Auslaufmundstück eingesetzt, das am Wasserauslauf einer sanitären Auslaufarmatur durch z.B. Verschrauben befestigbar oder direkt in die Armatur eingesetzt ist. Üblicherweise sind Filtersiebe aus einem undurchsichtigen Kunststoffmaterial hergestellt, so daß ein Blick auf abströmseitige Einsatzteile versperrt ist. Es ist somit dem Anwender nicht ohne weiteres möglich zu erkennen, welche weiteren strahlformende oder Durchflußmengen-begrenzende Mittel im Inneren des Strahlreglers befindlich sind.

Da, wie oben erwähnt, sich das Variantenspektrum der Strahlregler bzw. Strahlformer auf unterschiedliche Durchflußklassen erstreckt, wobei beispielsweise zum Betrieb einer Armatur an einem Handwaschbecken nur 6 l/min bei 3 bar erforderlich sind, hingegen beispielsweise zum Füllen einer Wanne 30 l/min bei 3 bar empfohlen werden, und, ebenfalls wie oben erwähnt, verschiedene Technologien zum Erzeugen der Durchflußklassen sowie zum Strahlformen mit laminarem, glasklarem oder mit Luft durchmischtem Strahl existieren, ist der Anwender von am Markt erhältlichen Strahlreglern, insbesondere im Ersatzteilbeschaffungs-Geschäft, oft nicht in der Lage zu erkennen, welche Strahlregler in die vorhandene Armatur eingesetzt werden müssen, so daß deren Betrieb störungsfrei und gemäß den notwendigen Komfort- und Sicherheitserfordernissen möglich wird.

Da darüber hinaus aus fertigungstechnologischen und kostenreduzierenden Gründen auch bei einer großen Vielzahl von Endprodukten die Anzahl funktionsbestimmender Bauteile möglichst klein gehalten werden soll, letztendlich auch um die Lagerhaltung zu minimieren, wurde bereits versucht, durch eine Kombination von wenigen Bauteilen oder Baugruppen die notwendige Produktpalette insgesamt bereitzustellen. Aber auch bei einem Herstellungsprozeß ist sicherzustellen, daß unter Beachtung der Qualitätssicherung tatsächlich nur die Bauteile zum Einsatz kommen, die in ihrer Gesamtheit die gewünschten Parameter des letztendlich beim Kunden einzusetzenden Strahlreglers sicherstellen.

Eine weitere Schwierigkeit bezüglich des Identifizierens geeigneter Strahlregler ergibt sich mit Blick auf den Stand der Technik dadurch, daß bedingt durch die im Regelfall genormten Ausläufe von Sanitärarmaturen nicht die Möglichkeit besteht, typrelevante bzw. einsatzspezifische Maßnahmen, z.B. durch eine besondere äußere Formgestaltung zu treffen. Weiterhin kommt erschwerend hinzu, daß die Strahlregler oft als sogenannte OEM-Produkte auf den Markt gelangen, wobei sowohl am Strahlregler selbst als auch am im Regelfall metallischen Außengehäuse, in dessen Inneren sich der Strahlregler befindet und das mit der Auslaufarmatur verbunden wird, nur Angaben des Herstellers der Armatur, nicht jedoch bezüglich der konkreten Eigenschaften des Strahlreglers zu finden sind. Mit anderen Worten ist die Gefahr von Verwechslungen beim Stand der Technik relativ groß, insbesondere dann, wenn im Ersatzteilbedarf die Produkte ohne Außengehäuse angeboten werden.

Aus dem Vorgenannten ist es daher Aufgabe der Erfindung, eine weiterentwickelte Sanitärkomponente, nämlich einen Strahlregler oder einen Strahlformer für strömende fluide Medien anzugeben, welcher durch verschiedene konstruktive und technologische Maßnahmen sowohl im Herstellungsprozeß als auch bei der späteren Applikation eindeutig identifizierbar ist, und wobei die Möglichkeit bestehen soll, die Fertigung derartiger Komponenten in effektiver, kostengünstiger und einfacherer Weise durchzuführen, ohne daß die Qualitätsansprüche bezüglich des Endprodukts gefährdet sind.

Weiterhin ist es Aufgabe der Erfindung, ein Verfahren zur Herstellung derartiger Sanitärkomponenten, nämlich Strahlregler oder Strahlformer, zu schaffen, welches für eine automatisierte Montage von Strahlreglern oder Strahlformern förderlich ist.

Letztendlich soll die Verwendung von Sanitärkomponenten, nämlich Strahlreglern oder Strahlformern, in einer solchen Weise möglich werden, daß mit an Sicherheit grenzender Wahrscheinlichkeit der Einsatz nicht geeigneter Komponenten, z.B. einer Durchflußklasse zum Füllen einer Wanne zum Betrieb einer Armatur an einem Handwaschbecken, ausgeschlossen ist. Gleiches gilt beim zu vermeidenden Einsatz nicht geeigneter Komponenten beim OEM-Kunden.

Die Lösung der Aufgabe der Erfindung erfolgt mit einer Sanitärkomponente gemäß den Merkmalen des Anspruchs 1, einem Verfahren zur Herstellung einer solchen Sanitärkomponente gemäß Definition nach Anspruch 20 sowie mit einer speziellen Verwendung von Sanitärkomponenten nach der Lehre des Anspruchs 22, wobei die Unteransprüche mindestens zweckmäßige Ausgestaltungen und Weiterbildungen darstellen.

Die erfindungsgemäße Sanitärkomponente, nämlich in Form eines Strahlreglers oder Strahlformers für strömende fluide Medien, besteht aus in Strömungsrichtung sandwichartig oder in einer Stapelanordnung befindlichen eigenschaftsbestimmenden Bauteilen.

Diese Bauteile umfassen mindestens ein bevorzugt kreisförmiges Vorsatz- oder Filtersieb, eine bevorzugt kreisförmige oder kreiszylindrische Zerlegerplattenanordnung sowie einen bevorzugt zylindrischen Hülsenkörper mit über seiner Querschnittsfläche verlaufenden strahlgleichrichtenden oder strahlformenden, Durchbrechungen aufweisenden Segmenten.

Zum Erreichen einer Anpaßbarkeit an unterschiedlichste Nutzer- und Einsatzanforderungen sind die eigenschaftsbestimmenden Bauteile austausch- und kombinierbar. Hierfür sind z.B. innenumfangsseitig des Hülsenkörpers Rastmittel und z.B. außenumfangsseitig der kreisförmigen Zerlegerplattenanordnung korrespondierende Rastgegenmittel angeordnet. Diese Mittel sind bevorzugt angeformt, d.h. einstückig mit dem entsprechenden Bauteil ausgebildet.

Die bevorzugt kreisförmige oder kreiszylindrische Zerlegerplattenanordnung weist mindestens außenseitig eine Durchflußklassen spezifizierende und der Hülsenkörper eine die Strömungsart bzw. die Strahlform definierende Codierung auf. Bevorzugt ist die Strömungsart bzw. die Strahlform laminar mit glasklarem Strahl oder sprudelnd, nämlich luftangereichert. Die Strömungsart bzw. die Strahlform wird durch eine spezifizierende optische Codierung symbolisiert.

Bei einer weiteren Ausführungsform erfindungsgemäßer Strahlregler besitzt der Hülsenkörper in seinem abströmseitigen Bereich einen schwenkbaren Einsatz bzw. einen schwenkbaren Strömungsgleichrichter mit dort vorgesehenen strahlformenden Mitteln.

Bei der kreisförmigen Ausführungsform der Zerlegerplattenanordnung und des Hülsenkörpers ist die Innenseite des Hülsenkörpers kugelkalottenförmig ausgebildet und es besitzt der verschwenkbare Strömungsgleichrichter ebenfalls eine hierzu komplementäre Kugelkalottenform. Durch den verschwenkbaren Gleichrichter läßt sich der austretende Strahl unter einem bestimmten Winkel ausgehend von der Längsachse des Strahlreglers kippen bzw. schwenken. Die Bewegung des Gleichrichters im Sinne des gewünschten Verschwenkens ist, ohne Hilfsmittel, d. h. durch leichten Fingerdruck auf die Unterseite der Platte realisierbar.

Die Art der Ausführung eines Strahlreglers mit und ohne verschwenkbaren Strahl durch beweglichen Strömungsgleichrichter kann durch eine weitere optische Codierung symbolisiert werden.

Bei einer Ausführungsvariante eines erfindungsgemäßen Strahlreglers ist an der Außenoberfläche des Strömungsgleichrichters, der auch einstückig mit dem Hülsenkörper ausgebildet sein kann eine Beschichtung mit einer definierten Mindestdicke oder Mindeststärke aus einem elastomeren Material, z. B. Silikon aufgebracht. Diese Beschichtung folgt dabei der Kontur bzw. der Struktur des Gleichrichters in Strömungsrichtung. An der elastomeren Beschichtung über die Betriebs- und Einsatzdauer des Strahlreglers anhaftende, insbesondere kalkhaltige Ablagerungen können durch Bewegen der Beschichtung im Sinne eines Rubbelns sehr leicht entfernt werden.

Die Art der Beschichtung der Außenseite des Strömungsgleichrichters gibt im übrigen die Möglichkeit einer weiteren, haptischen, d. h. erfühlbaren Codierung im Sinne der Aufgabenstellung der Erfindung.

Letztendlich sind Strahlregler bekannt, welche nicht von einer metallischen Außenhülse aufgenommen werden, sondern die unmittelbar in das z. B. rohrförmige Ende einer Auslaufarmatur eingeschraubt werden. Derartige versteckte Strahlregler weisen einen Hülsenkörper mit Außengewinde und einem Dichtring auf, der im Regelfall in einer umlaufenden Nut befindlich ist. Dieser Dichtring kann eine optische, d. h. farbige Codierung besitzen, die in Kontrast zum Farbcode des Hülsenkörpers steht. Diese Codierung symbolisiert dann z.B. die Art des Außengewindes, die Gewindesteigung oder ähnliches.

Das Vorsatzsieb ist bei einer Ausführungsform in einen umlaufenden Innenrücksprung der kreisförmigen Zerlegerplattenanordnung, bevorzugt mittels Rastverbindung bzw. snap-in-eingesetzt, wobei im Falle eines zwischen Vorsatzsieb und Zerlegerplattenanordnung befindlichen Durchflußmengenreglers das Vorsatzsieb durchscheinend oder transparent ausgebildet ist und der Durchflußmengenregler eine weitere optische Codierung besitzt.

Im Falle eines fehlenden Durchflußmengenreglers ist eine optische Codierung des Vorsatzsiebs mit derjenigen der Zerlegerplattenanordnung übereinstimmend oder in einer vorgegebenen Kombination ausgebildet.

In besonders bevorzugter Ausführung der Lehre der Erfindung sind die optischen Codierungen als jeweils unterschiedliche Farbcodierungen ausgebildet.

Die Farbabstufungen oder Farbunterschiede der jeweiligen Codierungen umfassen Farbtemperaturen, welche mittels optoelektronischer Bilderfassung und Auswertung detektierbar sind. Auch liegt es im Sinn der Erfindung, daß die Farbabstufungen ohne weiteres vom menschlichen Auge wahrgenommen werden können.

Die Farbcodes für das Vorsatzsieb umfassen 21 Farben, nämlich dunkelgrün, weinrot, hellgrün, hellblau, gelb, dunkelblau, dunkelgrau, hellgrau, grau, orange, blau, elfenbein, grün, braun, oliv, rot, beige, schwarz, rosa, lila und weiß.

Die Farbcodes für den Durchflußmengenregler umfassen zehn Farben, nämlich bevorzugt hellgrün, dunkelgrau, grün, lila, dunkelblau, rosa, orange, schwarz, gelb und weiß.

Die Farbcodes für die Zerlegerplattenanordnung umfassen mindestens elf Farben, nämlich dunkelgrün, weinrot, hellgrün, hellblau, gelb, dunkelblau, dunkelgrau, hellgrau, grau, orange und natur. Unter dem Farbton natur wird eine Farbe verstanden, die sich aus dem eingesetzten bevorzugt Kunststoffmaterial und dessen Materialeigenschaften ohne Farbbeimengung einstellt. Dieser Farbton ist beim bevorzugt eingesetzten Werkstoff POM opak bis milchig weiß.

Die Zerlegerplattenanordnung ist üblicherweise in den Hülsenkörper eingesetzt, kann aber auch z.B. als Bauteil ausgeführt sein, welches eine ringförmige Außenkontur besitzt, die sich von der Farbigkeit des Hülsenkörpers unterscheidet. Eine Naturfarbe der Zerlegerplattenanordnung symbolisiert dann eine nicht geräuschreduzierte und eine farbige Variante eine geräuschreduzierte Ausführung.

Der Farbcode für den Hülsenkörper umfaßt mindestens zwei Farben, wobei eine erste Farbe einem Hülsenkörper mit dort vorgesehenen Luftzuführungsschlitzen und eine zweite Farbe einem Hülsenkörper ohne Luftzuführungsschlitze zugeordnet ist.

Die erste Farbe ist bevorzugt dunkelgrau und die zweite Farbe bevorzugt hellgrau, wobei der Hülsenkörper jeweils durchgefärbt aus einem farbigen Kunststoffmaterial besteht.

Ein ergänzender Farbcode für den Hülsenkörper oder Hülsenkörperboden, und zwar mit einer farblichen Kennzeichnung, die von den oben genannten zwei Farben deutlich abweicht, stellt auf eine Ausführungsform ab, bei dem der Strömungsgleichrichter als Einsatzteil des Hülsenkörpers schwenkbar ausgeführt ist. Zum Beispiel symbolisiert die Farbe weiß eine schwenkbare und die Farben dunkelgrau bzw. hellgrau eine starre Ausführungsform.

Der bei der jeweiligen Sanitärkomponente zum Einsatz kommende Durchflußmengenregler weist einen Steuerspalt auf, dessen Durchflußquerschnitt mittels eines unter dem Druck des strömenden fluiden Mediums elastisch verformbaren Ringes veränderbar ist.
Die Transparenz des Vorsatzsiebs wird so gewählt, daß einerseits die Position des verformbaren Ringes erkennbar ist bzw. erkennbar bleibt und andererseits der komplette Mengenregler mit seiner Codierung ersichtlich ist.

Der elastische Ring kann in einer Ausführungsform der Erfindung ebenfalls eine optisch erkennbare Codierung, insbesondere Farbcodierung aufweisen, welche in Kontrast zum Steuerspalt bzw. dessen Umgebung steht.

Ausgestaltend besitzt das Vorsatzsieb zuströmseitig eine konvexe Form bzw. eine Kegelgestalt.

Das Vorsatzsieb umfaßt bevorzugt vieleckige Sieböffnungen und besitzt einen Ringbund, welcher in den Innenrücksprung der kreisförmigen Zerlegerplattenanordnung einrastet. Im Übrigen kann über die Farbgrundtönung des Vorsatzsiebs ein einfacher, leicht verständlicher Hinweis zum bevorzugten individuellen Einsatzzweck, z.B. "Wasser sparen", "maximaler Durchfluß" oder "normaler Verbrauch" gegeben werden.

Wie dargelegt, kann unter Beachtung der anwendungspezifischen Erfordernisse eine Auswahl von Zerlegerplattenanordnung und Hülsenkörper sowie gegebenenfalls Durchflußmengenregler getroffen werden, wobei diese Bauteile mit Hilfe der beispielsweisen Rastmittel bzw. Snap-in-Verbindungen in leichter Form montierbar sind. Obwohl nur eine geringe Anzahl von im Montagezustand erkennbaren Einzelbauteilen vorliegt, besteht durch die vorgeschlagene Art der optischen Codierung die Möglichkeit, visuell, d.h. ohne Hilfsmittel, allein durch eine leicht feststellbare Übereinstimmung mit einem Muster oder einer farbigen Abbildung festzustellen, ob das vorliegende Produkt den erwarteten Anforderungen entspricht bzw. ob es für den vorgesehenen Einsatzfall geeignet ist.

Bezüglich des Verfahrens zur Herstellung einer Sanitärkomponente, nämlich eines Strahlreglers oder eines Strahlformers für strömende fluide Medien, wird wiederum von den aus in Strömungsrichtung sandwichartig angeordneten eigenschaftsbestimmenden Bauteilen ausgegangen, wobei diese mindestens ein z.B. kreisförmiges Vorsatzsieb, eine z.B. kreisförmige Zerlegerplattenanordnung sowie einen z.B. zylindrischen Hülsenkörper mit über seiner Querschnittsfläche verlaufenden strahlformenden, strahlgleichrichtenden, Durchbrechungen aufweisenden Segmenten umfassen.

Zum Erreichen einer Anpaßbarkeit an unterschiedliche Nutzer- und Einsatzanforderungen sind die eigenschaftsbestimmenden Bauteile austausch- und kombinierbar. Hierfür wird bevorzugt auf bestimmte Rastmittel bzw. Rastverbindungen zurückgegriffen, die an den entsprechenden Bauteilen angeformt bzw. eingebracht sind.

Die z.B. kreisförmige Zerlegerplattenanordnung weist mindestens außenseitig eine Durchflußklassen-spezifizierende und der Hülsenkörper eine die Strömungsart, nämlich laminar oder luftangereichert, spezifizierende optische Codierung auf.

Das Vorsatzsieb kann in die Zerlegerplattenanordnung, bevorzugt mittels bereits erwähnter Rastverbindung eingesetzt werden, wobei im Fall eines zwischen Vorsatzsieb und Zerlegerplattenanordnung eingesetzten Durchflußmengenreglers das Vorsatzsieb durchscheinend oder transparent ausgeführt wird.

Der Durchflußmengenregler weist ebenfalls eine spezifizierende optische Codierung auf. Im Falle eines fehlenden Durchflußmengenreglers ist die optische Codierung des Vorsatzsiebs mit derjenigen der Zerlegerplattenanordnung übereinstimmend oder in einer vorgegebenen, insbesondere Farbkombination ausgeführt.

Verfahrensseitig wird anhand von kundenspezifischen Anforderungen über die gewünschte Durchflußklasse und der jeweiligen Strahlform und/oder Durchflußrate aus einer Codetabelle die Codierung der eigenschaftsbestimmenden Bauteile entnommen, welche mit den kundenspezifischen Anforderungen übereinstimmen oder sich diesen weitestgehend annähern.

Anhand dieser Angaben wird dann die Entnahme der Bauteile aus einem Lager und die Montage der Teile vereinfacht und auch automatisiert und kontrolliert durchführbar. Zur Kontrolle eignen sich hier insbesondere Methoden der optoelektronischen Bildaufnahme und der digitalen Bildverarbeitung.

Die Verwendung bzw. der Einsatz der Sanitärkomponenten gemäß der Erfindung, insbesondere wie sie im Patentanspruch 1 definiert ist, erfolgt anhand einer vom Hersteller autorisierten Codetabelle, welche angibt, welche optische Codierung der ohne Demontage erkennbaren Bauteile dem jeweiligen Einsatzfall hinsichtlich Strahlform, Durchflußmengenbegrenzung und/oder Durchflußklasse entspricht oder sich diesem weitgehend annähert.

Es sei an dieser Stelle angemerkt, daß in Umsetzung der erfindungsgemäßen Lehre nicht nur der Herstellungsprozeß optimierbar ist und eine Verbesserung der Qualitätssicherung eintritt, sondern es kann ohne weiteres der Endnutzer das jeweilige Ersatzmodell identifizieren, letztendlich mit der Folge einer vereinfachten Bestellauslösung bzw. eines einfacheren Einkaufs.

Die Erfindung soll nachstehend anhand eines Ausführungsbeispiels sowie unter Zuhilfenahme von Figuren und Tabellen näher erläutert werden.

Hierbei zeigen:
- Fig. 1: eine Sanitärkomponente in Form eines Strahlformers mit Hülsenkörper zum Erzeugen eines luftangereicherten Strahls;
- Fig. 1a: eine Teilschnittdarstellung gemäß Fig. 1;
- Fig. 2: eine Draufsicht einer Sanitärkomponente in Form eines Strahlreglers mit transparentem Vorsatzsieb und erkennbarer Reglereinheit;
- Fig. 2a: eine Teilschnittdarstellung gemäß Fig. 2;
- Fig. 3: eine Teilschnittdarstellung einer Sanitärkomponente mit zweiteiliger Zerlegerplattenanordnung;
- Fig. 4: eine Schnittdarstellung durch eine Ausführungsform eines Strahlreglers mit verschwenkbarem Strömungsgleichrichter innerhalb des Hülsenkörpers;
- Fig. 5: eine perspektivische Draufsicht eines Strahlreglers mit Außengewinde zur versteckten Montage innerhalb einer Auslaufarmatur;
- Tabelle 1: eine beispielsweise gewählte Codierung von Vorsatzsieb und Zerlegerplattenanordnung mit typischen für die jeweilige Farbkombination gegebenen Durchflußraten bei entsprechenden Druckwerten;
- Tabelle 2: eine Zusammenstellung der Farbcodes für den Durchflußmengenregler bei transparentem Vorsatzsieb zum Erfüllen der Funktion eines geregelten Durchflusses;
- Tabelle 3: eine Darstellung der Farbcodes der Hülse bzw. des Hülsenkörpers für die Funktion zum Erhalt eines belüfteten oder laminaren Strahls;
- Tabelle 4: und 5 eine beispielhafte Farbigkeit der Vorsatzsiebe je nach Verkaufsgebiet Europa oder USA bezüglich bestimmter bevorzugter Einsatzzwecke der Sanitärkomponenten;
- Tabelle 6: eine Farbcodierung eines äußerlich erkennbaren Diffusorrings als Teil der Zerlegerplattenanordnung bezüglich des Geräuschverhaltens der Sanitärkomponente;
- Tabelle 7: eine Darstellung des haptischen Codes bezüglich der Funktion Verkalkungsbeständigkeit und
- Tabelle 8: der Farbcode des Hülsenkörpers bzw. des Hülsenbodens hinsichtlich der gewünschten Strahlrichtung beim Einsatz der Sanitärkomponente.

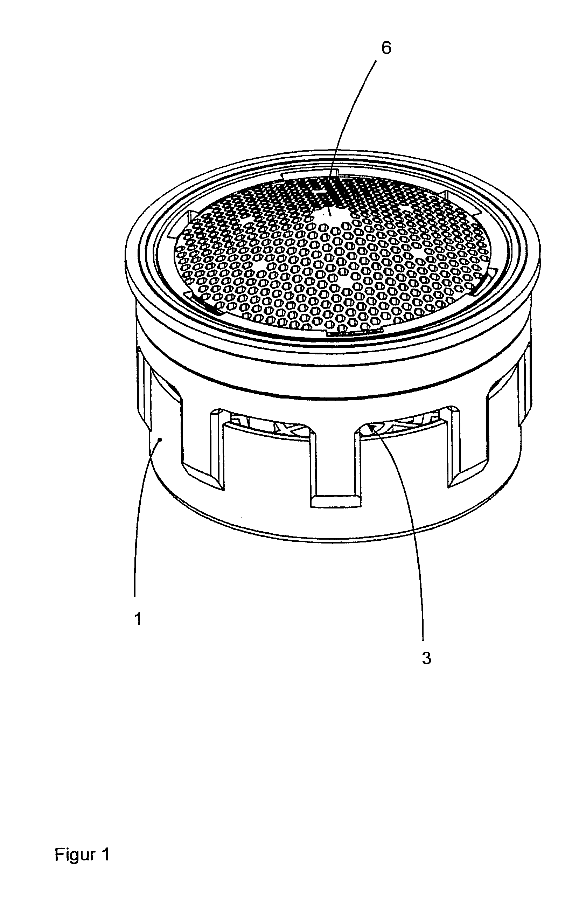

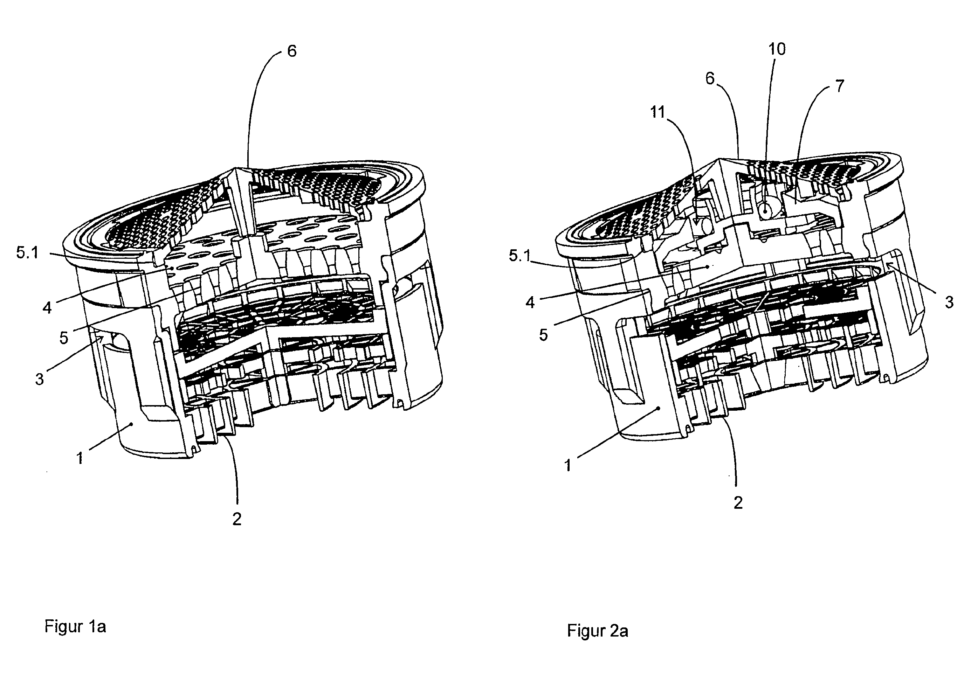

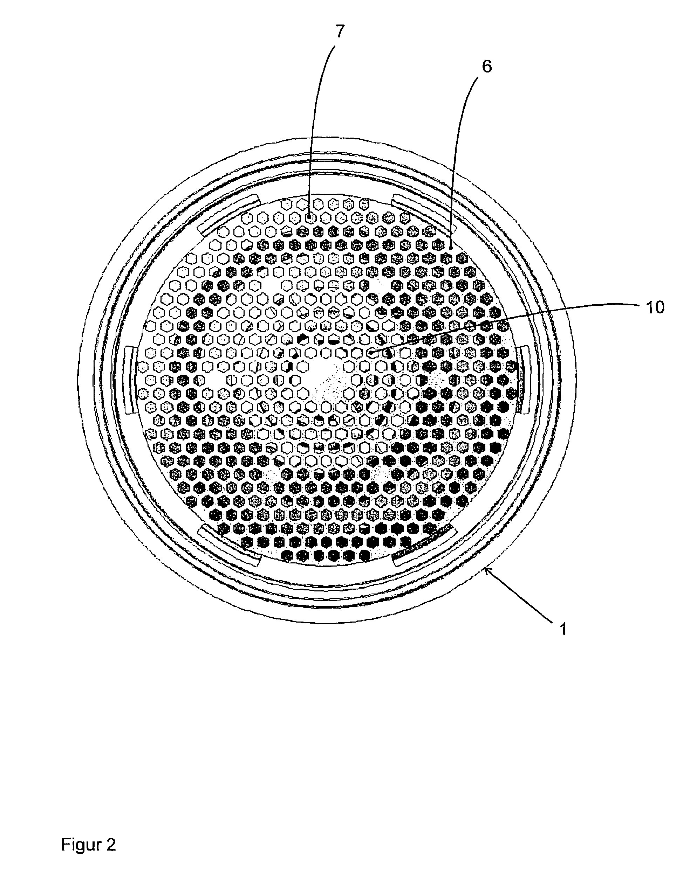

Gemäß den Fig. 2 und 2a umfaßt die Sanitärkomponente einen mengengeregelten Strahlregler (Fig. 2a) mit in Strömungsrichtung sandwichartig angeordneten eigenschaftsbestimmenden Bauteilen. Die Fig. 1 und 1a zeigen eine Sanitärkomponente mit einem lediglich strahlformenden bzw. strahlgleichrichtenden Strahlregler.

Die wesentlichsten Bauteile der Sanitärkomponenten gemäß der Erfindung sind der Hülsenkörper 1, an dessen Unterseite bzw. dessen unterem Abschnitt strömungsgleichrichtende, strahlformende Mittel 2 (Strömungsgleichrichter), die Durchbrechungen aufweisen, ausgebildet sind.

Über bestimmte Abschnitte des Außenumfangs weist der Hülsenkörper 1 schlitzartige Öffnungen 3 auf, die der Zufuhr von Umgebungsluft dienen, und zwar dann, wenn sich ein luftangereichertes, perlendes Strahlbild ergeben soll.

In Zuströmrichtung oberhalb des Hülsenkörpers 1 befindet sich eine kreisringförmige Zerlegerplattenanordnung 4. Diese Zerlegerplattenanordnung 4 weist eine Vielzahl von speziellen, strahlteilenden Öffnungen unterschiedlicher Querschnitte oder variierender Längsschnitte auf, so daß das anstehende Fluid beschleunigt wird und auf den in Strömungsrichtung folgenden Strömungsgleichrichter 2 gelangt.

Die Zerlegerplattenanordnung 4 ist z.B. über eine Rastverbindung 5 mit der Innenseite des Hülsenkörpers 1 in Kontakt stehend und wird entsprechend fixiert.

Es sind also zum Erreichen einer Anpaßbarkeit an unterschiedliche Nutzer- und Einsatzanforderungen die eigenschaftsbestimmenden Bauteile, nämlich Zerlegerplattenanordnung 4 und Hülsenkörper 1, mit den strahlformenden Mitteln 2 austausch- und kombinierbar. Hierfür sind innenumfangsseitig des Hülsenkörpers 1 Rastmittel und außenumfangsseitig der kreisförmigen Zerlegerplattenanordnung 4 korrespondierende Rastgegenmittel angeordnet, bevorzugt angeformt.

Die Codierung der kreisförmigen Zerlegerplattenanordnung 4 ist mindestens außenseitig vorhanden. Ebenso ist die Codierung am Hülsenkörper 1 mindestens außenseitig ausgebildet, wobei bevorzugt sowohl die kreisförmige Zerlegerplattenanordnung 4 als auch der Hülsenkörper 1 aus einem durchgefärbten Kunststoffmaterial besteht, wobei die Farbe des Kunststoffs der gewünschten optischen Codierung entspricht.

In die Zerlegerplattenanordnung 4 wird ebenfalls bevorzugt mittels Rastverbindung 5.1 oder stoffschlüssig ein Vorsatzsieb 6 eingesetzt. Zu diesem Zweck besitzt ausgestaltend die kreisförmige Zerlegerplattenanordnung 4 einen Innenrücksprung und das Vorsatzsieb 6 einen hierzu komplementären, partiellen oder vollständigen Bund.

Im Falle eines zwischen dem Vorsatzsieb 6 und der Zerlegerplattenanordnung 4 eingesetzten Durchflußmengenreglers 7 (siehe Fig. 2 und 2a) ist das Vorsatzsieb 6 bei dieser Ausführungsform transparent (siehe Fig. 2) ausgebildet und es besitzt der Durchflußmengenregler 7 eine weitere optische Codierung, die in Kontrast zur dortigen Zerlegerplattenanordnung 4 steht.

Im Falle eines fehlenden Durchflußmengenreglers 7 (Fig. 1 und 1a) ist die optische Codierung des Vorsatzsiebs 6 mit derjenigen der Zerlegerplattenanordnung 4 übereinstimmend oder in einer vorgegebenen Kombination, insbesondere Farbkombination gemäß Tabelle 1 ausgebildet.

Betrachtet man die Tabellen 1 bis 3 und die Ausführungsform der Sanitärkomponenten nach den Fig. 1a, 2a und 3, dann kann sowohl der Einsatzbereich als auch die Produktspezifikation bzw. deren Parameter leicht abgeleitet werden.

Bei dem Produkt nach Fig. 1 bzw. 1a handelt es sich demnach um einen Strahlregler mit Hülsenkörper 1 und schlitzförmigen Öffnungen 3, der gemäß Tabelle 3 dunkelgrau ausgeführt ist. Ein dunkelgrauer Hülsenkörper 1 bedeutet hier, daß dieser einen luftdurchsetzten Strahl erzeugt.

Aus der Kombination dunkelblaue Zerlegerplattenanordnung 4 mit dunkelblauem Vorsatzsieb 6 ergibt sich, daß der diesbezügliche Strahlregler für eine Durchflußklasse B geeignet ist (siehe Tabelle 1).

Die Sanitärkomponente nach Fig. 2 und 2a betrifft einen mengengeregelten Strahlregler, und zwar deshalb, weil das dortige Vorsatzsieb 6 transparent ausgeführt ist. Der durch das transparente Sieb 6 erkennbare Durchflußregler 7 weist eine gelbe Farbe auf, so daß sich eine Durchflußrate von maximal 8,3 l/min bei bestimmungsgemäßem Einsatz und entsprechend anstehendem, auch variablem Druck ergibt.

Weiterhin ist der in einem Steuerspalt 11 liegende elastisch verformbare Ring 10 erkennbar. Im unbelasteten Fall darf dieser Ring 10 nicht verformt sein und muß eine Soll-Lage bezüglich des zu verändernden Durchflußquerschnitts einnehmen. Die entsprechende Position des verformbaren Ringes 10 ist mittels des zur Anwendung kommenden transparenten Vorsatzsiebs 6 ohne weiteres erschließbar.

Hinsichtlich Fig. 2a und unter Beachtung der Tabelle 3 weist der dortige Hülsenkörper 1 ebenfalls eine dunkelgraue Farbe auf, was bedeutet, daß der hierdurch erzeugte Strahl ebenfalls luftdurchmischt ist.

Würde der Hülsenkörper 1 eine hellgraue Farbe aufweisen, bedeutete dies, daß ein laminarer Strahl beim bestimmungsgemäßen Einsatz des diesbezüglichen Strahlreglers erzeugt wird.

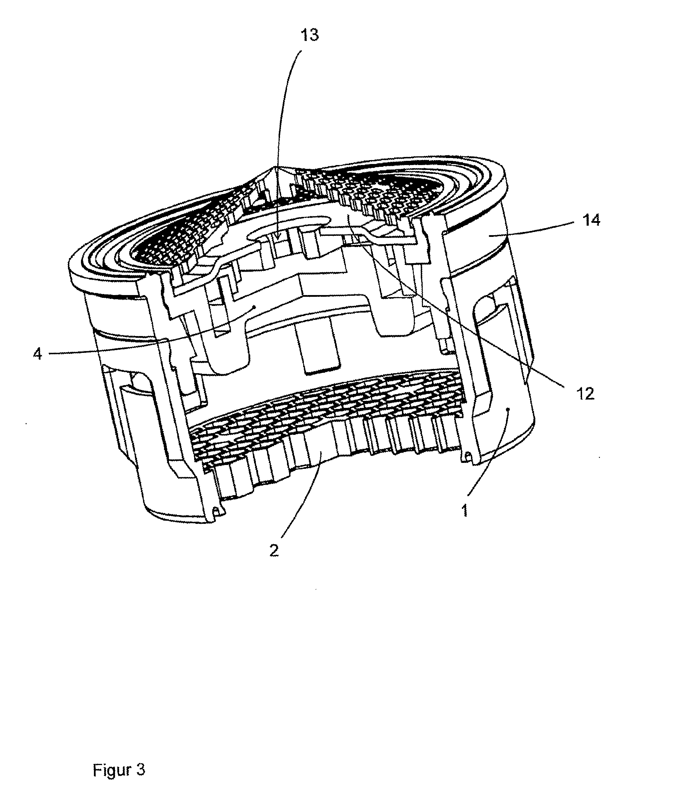

Die Sanitärkomponente nach Fig. 3 mit mehrteiliger Zerlegerplattenanordnung besitzt eine Blende 12 mit Durchflußöffnung 13. Diese Durchflußöffnung, deren die Durchflußklasse bestimmende Größe vom Anwender ohne weiteres nicht erkennbar ist, kann durch die Farbigkeit des Ringteils 14 und/oder die Farbigkeit des Vorsatzsiebs 6 symbolisiert werden. Das Ringteil 14 kann als Bestandteil der Zerlegerplattenanordnung ausgeführt sein.

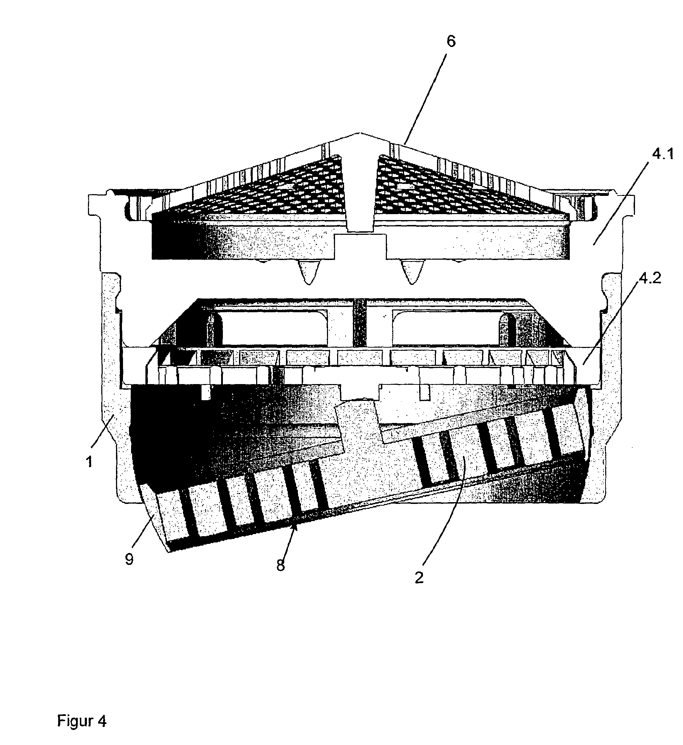

Die Ausführungsform des Strahlreglers nach Figur 4 stellt im wesentlichen eine analoge Grundkonstruktion dar, wie in den Figuren 1 und 2 bzw. 1a und 2a gezeigt.

Im Inneren des Hülsenkörpers 1 befindet sich die Zerlegerplattenanordnung mit einem oberen Teil 4.1 zum Zweck der Strahlbeschleunigung und einem unteren Teil 4.2, welcher den beschleunigten Strahl teilt und abbremst. Unterhalb der Zerlegerplattenanordnung ist als schwenkbares Teil 8 der Strömungsgleichrichter 2 befindlich. Um die in Fig. 4 gezeigte beispielhafte Verschwenkbewegung zu erreichen, ist innenumfangsseitig des Hülsenkörpers 1 dieser im unteren Abschnitt kugelkalottenförmig ausgebildet. Eine entsprechend komplementäre Kugelkalottenform 9 weist der Außenumfang des schwenkbaren Teiles 8 auf. Durch die Möglichkeit des Verschwenkens des Teiles 8 kann der austretende Strahl um einen bestimmten Winkel hin- und herbewegt werden, was wesentliche Gebrauchsvorteile einer derartig ausgerüsteten Wasserauslaufarmatur ergibt.

Die Farbcodierung des schwenkbaren Teiles 8 als Boden des Hülsenkörpers kann eine Gestalt aufweisen, die von der Farbe des Hülsenkörpers 1 abweicht um auch diesbezüglich eine eindeutige Zuordnung im Sinne der Erfindung zu ermöglichen, z.B. die Farbe gemäß Tabelle 8.

Eine zusätzliche haptische Codierung der Außenoberfläche des Strömungsgleichrichters bzw. Hülsenbodens ermöglicht, die Beständigkeit der Sanitärkomponenten gegen Kalkablagerungen gemäß Tabelle 7 zu definieren. Weiterhin gibt die Farbwahl nichttransparenter Vorsatzsiebe die Möglichkeit, dem Anwender der Sanitärkomponente Hinweise für den bevorzugten Einsatz, z.B. Einsparung von Wasser, deutlich zu machen. Die Farbe "grün" steht gemäß Tabelle 4 und 5 hier beispielsweise für eine Wassereinsparung durch reduzierten Durchfluß.

Es sei an dieser Stelle angemerkt, daß alle vorerwähnten optischen Codierungen unabhängig von den jeweiligen Durchmessern oder Größen der Sanitärkomponenten vorgegeben sind, vielmehr beziehen sich die optischen Codierungen lediglich auf funktions- bzw. komfortbestimmende Eigenschaften der Strahlregler.

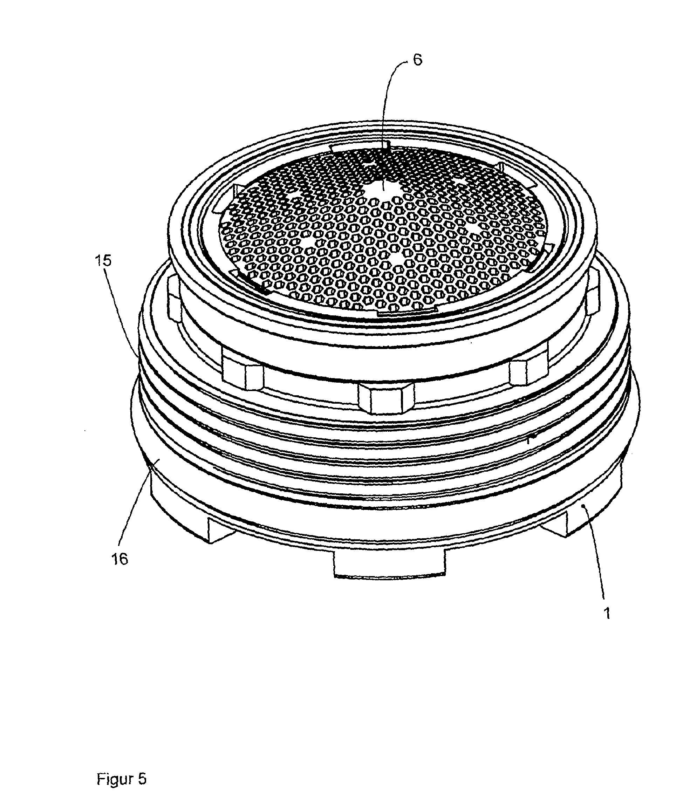

Die Fig. 5 zeigt eine Sanitärkomponente, deren Hülsenkörper 1 ein Außengewinde 15 aufweist, so daß ein unmittelbares Einschrauben in ein komplementäres Innengewinde einer Auslaufarmatur erfolgen kann. Auch hier können bezüglich Durchflußklassen und/oder Mengenregelung die erläuterten Codierungen Anwendung finden. Zusätzlich besteht die Möglichkeit, die Art und/oder Steigung des Außengewindes 15 über den Farbcode eines notwendigen Dichtrings 16 zu definieren.

### Bezugszeichenliste

- 1: Hülsenkörper
- 2: strahlformende Mittel im Querschnitt des Hülsenkörpers 1
- 3: schlitzartige Luftzuführungsöffnungen im Hülsenkörper 1
- 4: Zerlegerplattenanordnung, welche die Durchflußklasse bestimmt
- 5: Rastverbindung zwischen Hülsenkörper 1 und Zerlegerplattenanordnung 4
- 6: Vorsatzsieb
- 7: Mengenregler
- 8: schwenkbarer Strömungsgleichrichter
- 9: Kugelkalotte
- 10: elastischer Ring
- 11: Steuerspalt
- 12: Blende
- 13: Durchflußöffnung
- 14: Ringteil
- 15: Außengewinde
- 16: Dichtung

**Tabelle 1**

| **Durchfluß gedrosselt** | | | |
|---|---|---|---|
| **Vorsatz-Sieb** | **Zerleger/Restrictor** | **Funktion: Durchfluß** | |
| dunkelgrün | dunkelgrün | T | 5.7 l/min bei 4.2 bar |
| weinrot | weinrot | X | 8.3 l/min bei 4.2 bar |
| hellgrün | hellgrün | Z | 9.0 l/min bei 3 bar |
| hellblau | hellblau | A | 15.0 l/min bei 3 bar |
| gelb | gelb | S | 19.8 l/min bei 3 bar |
| dunkelblau | dunkelblau | B | 25.2 l/min bei 3 bar |
| dunkelgrau | dunkelgrau | C | 30.0 l/min bei 3 bar |
| hellgrau | hellgrau | D | 37.8 l/min bei 3 bar |
| grau | grau | M | 65.0 l/min bei 3 bar |
| orange | orange | G | > 65.0 l/min bei 3 bar |
| blau | natur | V | 21.0 l/min bei 3 bar |
| elfenbein | natur | 3.8 l/min bei 4.2 bar (1.0 gpm bei 60 psi) | |
| grün | natur | 5.7 l/min bei 4.2 bar (1.5 gpm bei 60 psi) | |
| braun | natur | 6.6 l/min bei 4.2 bar (1.75 gpm bei 60 psi) | |
| oliv | natur | 7.6 l/min bei 4.2 bar (2.0 gpm bei 60 psi) | |
| rot | natur | 8.3 l/min bei 4.2 bar (2.2 gpm bei 60 psi) | |
| beige | natur | 11.4 l/min bei 4.2 bar (3.0 gpm bei 60 psi) | |
| schwarz | natur | 13.2 l/min bei 4.2 bar (3.5 gpm bei 60 psi) | |
| rosa | natur | 15.1 l/min bei 4.2 bar (4.0 gpm bei 60 psi) | |
| lila | natur | 17.0 l/min bei 4.2 bar (4.5 gpm bei 60 psi) | |
| weiß | natur | max flow, > 35 l/min bei 3 bar | |

**Tabelle 2**

| **Durchfluß geregelt** | | |
|---|---|---|
| **Vorsatz Sieb** | **Mengenregler** | **Funktion: geregelter Durchfluß** |
| transparent | hellgrün | 1.7 l/min (0,5gpm max.) |
| transparent | dunkelgrau | 2.0 l/min |
| transparent | grün | 2.5 l/min |
| transparent | lila | 3.0 l/min |
| transparent | dunkelblau | 3.5 l/min (1.0 gpm max.) |
| transparent | rosa | 4.0 l/min |
| transparent | orange | 5.0 l/min (1.5 gpm max.) |
| transparent | schwarz | 6.0 l/min (1.75 gpm max.) |
| transparent | gelb | 8.3l/min (2.2 gpm max.) |
| transparent | weiß | 8.0 l/min |

**Tabelle 3**

| **Strahlart** | |
|---|---|
| **Hülse** | **Funktion: Strahlart** |
| dunkelgrau | belüftet |
| hellgrau | laminar |

**Tabelle 4**

| **predefined retail colours EU** | |
|---|---|
| **Vorsatz-Sieb** | **Funktion** |
| Grünton | Wasser sparen |
| Blauton | standard Durchfluß |
| Grauton | full flow |

**Tabelle 5**

| **predefined retail colours US** | |
|---|---|
| **Vorsatz-Sieb** | **Funktion** |
| Grünton | Wasser sparen |
| Rotton | standard Durchfluß |
| Grauton | full flow |

**Tabelle 6**

| **Geräuschcodierung** | |
|---|---|
| **Diffusor Ring** | **Funktion: Geräusch** |
| natur | nicht Geräusch reduziert |
| farbig | Geräusch reduziert |

**Tabelle 7**

| **Haptik** | |
|---|---|
| **Haptik** | **Funktion: Verkalkungsbeständigkeit** |
| geriffelt (flächig nachgiebig) bei Sieb-Stuktur | Standard |
| hart (nicht nachgiebig) bei Kuststoff-Struktur | Antikalk Funktion |
| soft (punktuell nachgiebig) bei Elastomer-Struktur | aktive Antikalk Funktion |

**Tabelle 8**

| **Beweglichkeit** | |
|---|---|
| **Hülsenboden** | **Strahlrichtung** |
| weiß | schwenkbar |
| dunkelgrau | starr, in Achsrichtung |
| hellgrau | starr, in Achsrichtung |

## Patentansprüche

1. Sanitärkomponente, nämlich Strahlregler oder Strahlformer für strömende fluide Medien, bestehend aus in Strömungsrichtung sandwichartig angeordneten, eigenschaftsbestimmenden Bauteilen, diese umfassend mindestens ein Vorsatzsieb, eine Zerlegerplattenanordnung sowie einen Hülsenkörper mit über seiner Querschnittsfläche verlaufenden strahlformenden, Durchbrechungen aufweisenden Segmenten,
wobei zum Erreichen der Anpaßbarkeit an unterschiedlichste Nutzer- und Einsatzanforderungen die eigenschaftsbestimmenden Bauteile austausch- und kombinierbar sind und hierfür am oder im Hülsenkörper Befestigungsmittel und an der Zerlegerplattenanordnung korrespondierende Befestigungsmittel angeordnet, bevorzugt angeformt oder eingeformt sind, **dadurch gekennzeichnet, dass** die Zerlegerplattenanordnung mindestens außenseitig eine Durchflußklassen-spezifizierende und der Hülsenkörper eine die Strömungsart, nämlich laminar oder luftangereichert, spezifizierende optische Codierung aufweist,
weiterhin das Vorsatzsieb mit der Zerlegerplattenanordnung verbunden ist,
wobei im Falle eines zwischen Vorsatzsieb und Zerlegerplattenanordnung eingesetzten Durchflußmengenreglers das Vorsatzsieb durchscheinend oder transparent ausgebildet ist und der Durchflußmengenregler eine weitere optische Codierung besitzt,
sowie im Falle eines fehlenden Durchflußmengenreglers eine optische Codierung des Vorsatzsiebs mit derjenigen der Zerlegerplattenanordnung übereinstimmend oder in einer vorgegebenen Kombination ausgebildet ist.

2. Sanitärkomponente nach Anspruch 1,
**dadurch gekennzeichnet, daß**
die optischen Codierungen als jeweils unterschiedliche Farbcodierungen ausgebildet sind.

3. Sanitärkomponente nach Anspruch 2,
**dadurch gekennzeichnet, daß**
die Farbabstufungen oder Farbunterschiede der jeweiligen Codierungen Farbtemperaturen umfassen, welche mittels optoelektronischer Bilderfassung und Auswertung sowie ohne Hilfsmittel visuell detektierbar sind.

4. Sanitärkomponente nach Anspruch 1,
**dadurch gekennzeichnet, daß**
die Farbcodes für das Vorsatzsieb im Fall einer Nichtübereinstimmung mit dem Code der Zerlegerplattenanordnung die Farben blau, elfenbein, grün, braun, oliv, rot, beige, schwarz, rosa, lila und weiß umfasst.

5. Sanitärkomponente nach Anspruch 2 oder 3,
**dadurch gekennzeichnet, daß**
die Farbcodes für den Durchflußmengenregler zehn Farben, nämlich hellgrün, dunkelgrau, grün, lila, dunkelblau, rosa, orange, schwarz, gelb und weiß umfassen.

6. Sanitärkomponente nach einem der Ansprüche 2 bis 5,
**dadurch gekennzeichnet, daß**
die Farbcodes für die Zerlegerplattenanordnung mindestens elf Farben, nämlich dunkelgrün, weinrot, hellgrün, hellblau, gelb, dunkelblau, dunkelgrau, hellgrau, grau, orange und natur umfassen.

7. Sanitärkomponente nach Anspruch 5,
**dadurch gekennzeichnet, daß**
das Vorsatzsieb die Farbcodes dunkelgrün, weinrot, hellgrün, hellblau, gelb, dunkelblau, dunkelgrau, hellgrau, grau oder orange aufweist.

8. Sanitärkomponente nach einem der Ansprüche 2 bis 6,
**dadurch gekennzeichnet, daß**
die Farbcodes für den Hülsenkörper mindestens zwei Farben umfassen,
wobei eine erste Farbe einem Hülsenkörper mit dort vorgesehenen Luftzuführungsschlitzen und eine zweite Farbe einem Hülsenkörper ohne Luftzuführungsschlitze zugeordnet ist.

9. Sanitärkomponente nach Anspruch 8,
**dadurch gekennzeichnet, daß**
die erste Farbe dunkelgrau und die zweite Farbe hellgrau ist, wobei der Hülsenkörper jeweils durchgefärbt aus einem farbigen Kunststoffmaterial besteht.

10. Sanitärkomponente nach einem der Ansprüche 2 bis 9,
**dadurch gekennzeichnet, daß**
der Hülsenkörper einen abstromseitigen verschwenkbaren Hülsenboden als Strömungsgleichrichter aufweist, wobei dieser verschwenkbare Boden einen weiteren Farbcode besitzt.

11. Sanitärkomponente nach Anspruch 10,
**dadurch gekennzeichnet, daß**
der weitere Farbcode von den Farbcodes für den Hülsenkörper abweicht.

12. Sanitärkomponente nach einem der Ansprüche 2 bis 11,
**dadurch gekennzeichnet, daß**
an der abstromseitigen Außenseite des Hülsenkörpers oder des dort befindlichen Strömungsgleichrichters eine Beschichtung aus einem elastomeren Material aufgebracht ist.

13. Sanitärkomponente nach Anspruch 12,
**dadurch gekennzeichnet, daß**
die Beschichtung farbig ist oder einen Farbcode aufweist und/oder die elastomeren Eigenschaften der Beschichtung eine haptische Codierung ermöglichen.

14. Sanitärkomponente nach einem der vorangegangenen Ansprüche,
**dadurch gekennzeichnet, daß**
der Durchflußmengenregler einen Steuerspalt aufweist, dessen Durchflußquerschnitt mittels eines unter dem Druck des strömenden fluiden Mediums elastisch verformbaren Ringes veränderbar ist, wobei die Transparenz des Vorsatzsiebs so gewählt wird, daß der Mengenregler selbst als auch die Position des verformbaren Ringes erkennbar ist.

15. Sanitärkomponente nach Anspruch 14,
**dadurch gekennzeichnet, daß**
der elastische Ring ebenfalls eine optisch erkennbare Codierung, insbesondere Farbcodierung aufweist, welche in Kontrast zum Steuerspalt oder dessen Umgebung steht.

16. Sanitärkomponente nach einem der vorangegangenen Ansprüche,
**dadurch gekennzeichnet, daß**
das Vorsatzsieb zuströmseitig eine konvexe oder Kegelform aufweist.

17. Sanitärkomponente nach Anspruch 16,
**dadurch gekennzeichnet, daß**
das Vorsatzsieb vieleckige Sieböffnungen aufweist und einen Ringbund besitzt, welcher in den Innenrücksprung der kreisförmigen Zerlegerplattenanordnung einrastet.

18. Sanitärkomponente nach einem der vorangegangenen Ansprüche,
**dadurch gekennzeichnet, daß**
sowohl das Vorsatzsieb, die Zerlegerplattenanordnung als auch der Hülsenkörper einen kreisförmigen Querschnitt aufweist.

19. Sanitärkomponente nach einem der vorangegangenen Ansprüche,
**dadurch gekennzeichnet, daß**
der Hülsenkörper ein Außengewinde aufweist, so daß ein unmittelbares Einschrauben in ein komplementäres Innengewinde einer Auslaufarmatur erfolgen kann, wobei ein auf dem Hülsenkörper vorgesehener Dichtring einen Code, insbesondere Farbcode aufweist, um Gewindeart und/oder Gewindesteigung des Außengewindes zu definieren.

20. Verfahren zur Herstellung einer Sanitärkomponente, nämlich eines Strahlreglers oder Strahlformers, für strömende fluide Medien, bestehend aus in Strömungsrichtung sandwichartig angeordneten, eigenschaftsbestimmenden Bauteilen, diese umfassend mindestens ein Vorsatzsieb, eine Zerlegerplattenanordnung oder Diffusor sowie einen Hülsenkörper mit über seiner Querschnittsfläche verlaufenden strahlformenden, Durchbrechungen aufweisenden Segmenten, wobei zum Erreichen einer Anpaßbarkeit an unterschiedlichste Nutzer- und Einsatzanforderungen die eigenschaftsbestimmenden Bauteile austausch- und kombinierbar sind und am oder im Hülsenkörper Rastmittel und an der Zerlegerplattenanordnung korrespondierende Rastgegenmittel angeordnet sind, die Zerlegerplattenanordnung mindestens außenseitig eine Durchflußklassen-spezifizierende und der Hülsenkörper eine die Strömungsart, nämlich laminar oder luftangereichert, spezifizierende optische Codierung aufweist, weiterhin das Vorsatzsieb mit der Zerlegerplattenanordnung verbunden ist, wobei im Falle eines zwischen Vorsatzsieb und Zerlegerplattenanordnung eingesetzten Durchflußmengenreglers das Vorsatzsieb durchscheinend oder transparent ausgebildet ist und der Durchflußmengenregler eine weitere optische Codierung besitzt sowie im Falle eines fehlenden Durchflußmengenreglers eine optische Codierung des Vorsatzsiebs mit derjenigen der Zerlegerplattenanordnung übereinstimmend oder in einer vorgegebenen Kombination ausgebildet ist,
wobei anhand von kundenspezifischen Anforderungen über die gewünschte Durchflußklasse und der jeweiligen Strahlform und/oder Durchflußrate aus einer Codetabelle die Codierung der eigenschaftsbestimmenden Bauteile entnommen wird, welche mit den kundenspezifischen Anforderungen übereinstimmen oder sich diesen weitestgehend annähern, um die Entnahme der Bauteile aus einem Lager und die Montage dieser fehlerfrei und kontrolliert durchzuführen.

21. Verfahren nach Anspruch 20,
**dadurch gekennzeichnet, daß**
die Kontrolle der Fertigung sowie die Qualitätskontrolle der Sanitärkomponenten mittels Bildaufnahme und computergestützter Bildverarbeitung erfolgt, wobei für die jeweiligen Codes auf vorgegebene Farben unterschiedlicher Farbtemperatur zurückgegriffen wird.

22. Verwendung einer Sanitärkomponente, nämlich eines Strahlreglers oder Strahlformer für strömende fluide Medien, bestehend aus in Strömungsrichtung sandwichartig angeordneten, eigenschaftsbestimmenden Bauteilen, diese umfassend mindestens ein kreisförmiges Vorsatzsieb, eine kreisförmige Zerlegerplattenanordnung sowie einen zylindrischen Hülsenkörper mit über seiner Querschnittsfläche verlaufenden strahlformenden, Durchbrechungen aufweisenden Segmenten, wobei zum Erreichen einer Anpaßbarkeit an unterschiedlichste Nutzer- und Einsatzanforderungen die eigenschaftsbestimmenden Bauteile austausch- und kombinierbar sind und hierfür innenumfangsseitig des Hülsenkörpers Rastmittel und außenumfangsseitig der kreisförmigen Zerlegerplattenanordnung korrespondierende Rastgegenmittel angeordnet sind,
die kreisförmige Zerlegerplattenanordnung mindestens außenseitige eine Durchflußklassen-spezifizierende und der Hülsenkörper eine die Strömungsart, nämlich laminar oder luftangereichert, spezifizierende optische Codierung aufweist, weiterhin das Vorsatzsieb in einen umlaufenden Innenrücksprung der kreisförmigen Zerlegerplattenanordnung eingesetzt ist, wobei im Falle eines zwischen Vorsatzsieb und Zerlegerplattenanordnung eingesetzten Durchflußmengenreglers das Vorsatzsieb durchscheinend oder transparent ausgebildet ist und der Durchflußmengenregler eine weitere optische Codierung besitzt sowie im Falle eines fehlenden Durchflußmengenreglers eine optische Codierung des Vorsatzsiebs mit derjenigen der Zerlegerplattenanordnung übereinstimmt oder in einer vorgegebenen Kombination ausgebildet ist,
anhand einer vom Hersteller autorisierten Codetabelle, welche angibt, welche optische Codierung der ohne Demontage erkennbaren Bauteile dem jeweiligen Einsatzfall hinsichtlich Strahlform, Durchflußmengenbegrenzung und/oder Durchflußklasse entspricht oder sich diesem Einsatzfall weitgehend annähert.

23. Verwendung einer Sanitärkomponente nach Anspruch 22,
**dadurch gekennzeichnet, daß**
die Codierungen als Farben unterschiedlicher Farbtemperatur ausgeführt sind.

## Claims

1. Sanitary component, namely a jet regulator or jet former, for flowing fluid media, comprising property-defining components arranged in a sandwich structure in the flow direction, these including at least one end screen, one diffuser plate arrangement and a shell body with segments having openings dispersed over its cross sectional surface to form a jet, wherein the property-defining components are exchangeable and able to be combined in order to achieve the adaptability required for different users and applications and for this purpose fastening means are preferably formed onto or moulded onto or into the shell body and corresponding fastening means are arranged on the diffuser plate arrangement,
**characterised in that**
the diffuser plate arrangement has at least one optical coding that externally indicates flow-rate class and the shell body has an optical coding that indicates the flow type, namely laminar or air-enriched,
furthermore the end screen is connected to the diffuser plate arrangement and is designed to be translucent or transparent in the case where a flow regulator is inserted between the end screen and the diffuser plate arrangement and the flow regulator has an additional optical coding, and
if the flow regulator is absent, an optical coding of the end screen is provided that corresponds with that of the diffuser plate arrangement or that combines therewith in a predetermined combination.

2. Sanitary component according to Claim 1,
**characterised in that**
the optical codings are designed as different colour codings in each case.

3. Sanitary component according to Claim 2,
**characterised in that**
the colour graduations or colour differences of each of the codings include colour temperatures, which are visually detectable by means of opto-electronic image acquisition and evaluation as well as unaided.

4. Sanitary component according to Claim 1,
**characterised in that**
the colour codes for the end screen include the colours blue, ivory, green, brown, olive, red, beige, black, pink, mauve and white, if they do not correspond with the diffuser plate arrangement code.

5. Sanitary component according to Claim 2 or 3,
**characterised in that**
the colour codes for the flow regulator include ten colours, namely light green, dark grey, green, mauve, dark blue, pink, orange, black, yellow and white.

6. Sanitary component according to one of the Claims 2 to 5,
**characterised in that**
the colour codes for the diffuser plate arrangement include at least eleven colours, namely dark green, wine red, light green, light blue, yellow, dark blue, dark grey, light grey, grey, orange and natural.

7. Sanitary component according to Claim 5,
**characterised in that**
the colour codes for the end sieve are dark green, wine red, light green, light blue,yellow, dark blue, dark grey, light grey, grey or orange.

8. Sanitary component according to one of the Claims 2 to 6,
**characterised in that**
the colour codes for the shell body include at least two colours, in which a first colour is assigned to a shell body with air supply slots provided therein and a second colour is assigned to a shell body having no air supply slots.

9. Sanitary component according to Claim 8,
**characterised in that**
the first colour is dark grey and the second colour is light grey, in which the shell body in each case consists of a coloured plastics material dyed throughout.

10. Sanitary component according to one of the Claims 2 to 9,
**characterised in that**
the shell body has a shell base pivotable on the outflow side as a flow rectifier, the pivotable swinging base having an additional colour code.

11. Sanitary component according to Claim 10,
**characterised in that**
the additional colour code is different from the colour codes for the shell body.

12. Sanitary component according to one of the Claims 2 to 11,
**characterised in that**
a layer of elastomeric material is provided on the exterior of the shell body or the flow rectifier located thereon on the outflow side.

13. Sanitary component according to Claim 12,
**characterised in that**
the layer is coloured or has a colour code and/or the elastomeric properties of the layer enable a haptic coding.

14. Sanitary component according to one of the foregoing claims,
**characterised in that**
the flow regulator has a control gap, whose flow cross section is changeable by means of an elastically deformable ring under pressure of the flowing fluid medium, the transparency of the end screen being chosen so that the flow regulator itself is recognisable as also is the position of the deformable ring.

15. Sanitary component according to Claim 14,
**characterised in that**
the elastic ring likewise has an optically detectable coding, in particular colour coding, which is in contrast with the control gap or its surroundings.

16. Sanitary component according to one of the foregoing claims,
**characterised in that**
the end sieve has a convex or conical form on the inflow side.

17. Sanitary component according to Claim 16,
**characterised in that**
the end screen has polygonal openings and an annular collar, which snaps into the inner recess of the circular diffuser plate arrangement.

18. Sanitary component according to one of the foregoing claims,
**characterised in that**
the end screen, the diffuser plate arrangement and the shell body have a circular cross section.

19. Sanitary component according to one of the foregoing claims,
**characterised in that**
the shell body has an external thread so that it can be screwed directly into a complementary internal thread of a drain valve, a sealing ring provided on the shell body having a code, especially a colour code, in order to define thread type and/or thread pitch of the male thread.

20. Method of manufacturing a sanitary component, namely a jet regulator or jet moulder, for flowing fluid media, comprising property-defining components arranged in the flow direction in a sandwich form, including at least one end screen, one diffuser plate arrangement or diffuser along with a shell body having segments with openings forming jets running over its cross sectional area, the characteristic-defining components being exchangeable and combinable in order to achieve adaptability for various user and application requirements,
wherein snap-in means are arranged on or in the shell body and corresponding counter snap-in means on the diffuser plate arrangement, the diffuser plate arrangement having at least one optical coding which specifies flow class on the outside and the shell body has one which specifies the flow type, namely laminar or air-enriched,
wherein the end screen is connected to the splitter plate arrangement, and is designed to be translucent or transparent if a flow regulator is inserted between end screen and the diffuser plate arrangement and the flow regulator has an additional coding, and if the flow regulator is absent an optical coding of the end screen is designed to correspond to that of the diffuser plate arrangement or is provided in a predetermined combination, and
wherein the coding of the characteristic-determining components corresponding to customer-specific requirements or largely approximating same is obtained from a coding table on the basis of the respective desired jet form and/or flow rate, in order to carry out the procurement of the components from a store and the faultless and verified assembly of these.

21. Process according to Claim 20,
**characterised in that**
inspection of the manufacture and quality control of the sanitary components is effected by means of image capture and computer-aided image processing,
wherein predetermined colours of different colour temperature are used for the respective codes.

22. Use of a sanitary component, namely of a jet regulator or jet moulder for flowing fluid media, comprising property-defining components arranged in the flow direction in sandwich form, including at least one circular end screen, one circular diffuser plate arrangement along with a cylindrical shell body having segments with stream-forming openings dispersed across its cross sectional area, the property-defining components being exchangeable and combinable in order to achieve adaptability for various user and application requirements for which snap-in means are arranged peripherally on the inside of the shell body and corresponding counter snap-in means are arranged peripherally on the outside of the circular diffuser plate arrangement, the circular diffuser plate arrangement having at least one optical coding which specifies flow class on the outside and the shell body having one which specifies the flow type, namely laminar or air-enriched,
furthermore the end screen is inserted in an internal continuous recess of the circular diffuser plate arrangement and is designed to be translucent or transparent when a flow regulator is inserted between end screen and the diffuser plate arrangement and the flow regulator possesses an additional coding, and if the flow regulator is absent an optical coding of the end screen is provided to correspond to that of the diffuser plate arrangement or to be in a predetermined combination therewith, a coding table authorised by the manufacturer, indicating the optical coding of the components recognizable without dismantling corresponding to the respective application case with respect to jet form, flow rate limit and/or flow rate class, or approximating this application case to a great extent.

23. Use of a sanitary component according to Claim 22,
**characterised in that**
the codings are embodied as colours with different colour temperatures.

## Revendications

1. Composant sanitaire, notamment dispositif de régulation de jet ou de formation de jet pour milieux fluides en écoulement, se composant d'éléments spécifiques déterminant les propriétés agencés en sandwich dans le sens d'écoulement, ces éléments comprenant au moins un tamis préliminaire, un dispositif à plaques de dispersion ainsi qu'un corps de douille avec des segments comprenant des perforations de formation de jet situées sur sa surface de section transversale,
dans lequel pour parvenir à être adaptés aux exigences les plus diverses d'application et de l'utilisateur, les éléments spécifiques déterminant les propriétés sont interchangeables et combinables et pour ce faire des moyens de fixation sont disposés, de préférence moulés ou formés, sur ou dans le corps de douille et des moyens de fixation correspondants sont disposés sur le dispositif à plaques de dispersion, **caractérisé en ce que** le dispositif à plaques de dispersion comprend au moins à l'extérieur un codage optique spécifiant la catégorie de débit et le corps de douille comprend lui un codage optique spécifiant le type d'écoulement, c'est-à-dire laminaire ou enrichi en air,
en outre le tamis préliminaire est relié au dispositif à plaques de dispersion, et dans le cas d'un régulateur de coefficient de débit placé entre le tamis préliminaire et le dispositif à plaques de dispersion, le tamis préliminaire est conçu de façon translucide ou transparente et le régulateur de coefficient de débit possède un autre codage optique,
tandis que, en cas d'absence de régulateur de coefficient de débit, un codage optique du tamis préliminaire est conçu dans une combinaison prédéfinie ou de manière coïncidente avec celui du dispositif à plaques de dispersion.

2. Composant sanitaire selon la revendication 1, **caractérisé en ce que** les codages optiques sont conçus chacun comme différents codes de couleurs.

3. Composant sanitaire selon la revendication 2, **caractérisé en ce que** les échelles de couleurs ou les différences de couleurs des codes respectifs comprennent des températures de couleurs qui peuvent être repérées de manière visuelle au moyen d'une saisie d'images optoélectronique et d'une évaluation ainsi que sans moyen supplémentaire.

4. Composant sanitaire selon la revendication 1, **caractérisé en ce que** les codes de couleurs pour le tamis préliminaire, en cas de non concordance avec le code du dispositif à plaques de dispersion, comprennent les couleurs bleu, ivoire, vert, marron, olive, rouge, beige, noir, rose, mauve et blanc.

5. Composant sanitaire selon la revendication 2 ou 3, **caractérisé en ce que** les codes de couleurs pour le régulateur de coefficient de débit comprennent dix couleurs, à savoir : vert clair, gris foncé, vert, mauve, bleu foncé, rose, orange, noir, jaune et blanc.

6. Composant sanitaire selon l'une des revendications 2 à 5, **caractérisé en ce que** les codes de couleurs pour le dispositif à plaques de dispersion comprennent au moins onze couleurs, à savoir : vert foncé, bordeaux, vert clair, bleu clair, jaune, bleu foncé, gris foncé, gris clair, gris, orange et naturel.

7. Composant sanitaire selon la revendication 5, **caractérisé en ce que** le tamis préliminaire comprend les codes de couleurs : vert foncé, bordeaux, vert clair, bleu clair, jaune, bleu foncé, gris foncé, gris clair, gris ou orange.

8. Composant sanitaire selon l'une des revendications 2 à 6, **caractérisé en ce que** les codes de couleurs pour le corps de douille comprennent au moins deux couleurs, une première couleur étant affectée à un corps de douille avec des fentes d'amenée d'air prévues sur celui-ci et une seconde couleur étant affectée à un corps de douille sans fentes d'amenée d'air.

9. Composant sanitaire selon la revendication 8, **caractérisé en ce que** la première couleur est gris foncé et la seconde couleur gris clair, le corps de douille teinté de manière spécifique se composant d'une matière plastique de couleur.

10. Composant sanitaire selon l'une des revendications 2 à 9, **caractérisé en ce que** le corps de douille comprend un culot de douille pouvant être amené à pivoter du côté flux sortant et constituant un stabilisateur d'écoulement, ce culot pouvant être amené à pivoter possédant un autre code de couleurs.

11. Composant sanitaire selon la revendication 10, **caractérisé en ce que** l'autre code de couleurs diffère des codes de couleurs du corps de douille.

12. Composant sanitaire selon l'une des revendications 2 à 11, **caractérisé en ce qu'**un revêtement composé d'un matériau élastomère est appliqué à l'extérieur, du côté flux sortant du corps de douille ou du stabilisateur d'écoulement se trouvant à cet endroit.

13. Composant sanitaire selon la revendication 12, **caractérisé en ce que** le revêtement est coloré ou comporte un code de couleurs et/ou les propriétés élastomères du revêtement permettent un codage haptique.

14. Composant sanitaire selon l'une des revendications précédentes, **caractérisé en ce que** le régulateur de coefficient de débit comprend une fente de commande dont la section transversale d'écoulement peut être modifiée au moyen d'une bague déformable de manière élastique sous la pression du milieu fluide d'écoulement, auquel cas la transparence du tamis préliminaire est choisie de telle sorte que le régulateur de coefficient de débit lui-même ainsi que la position de la bague déformable puissent être reconnaissables.

15. Composant sanitaire selon la revendication 14, **caractérisé en ce que** la bague flexible comprend également un codage pouvant être reconnaissable de manière optique, en particulier un code de couleurs qui contraste par rapport à la fente de commande ou son environnement.

16. Composant sanitaire selon l'une des revendications précédentes, **caractérisé en ce que** le tamis préliminaire comporte du côté du flux entrant une forme convexe ou conique.

17. Composant sanitaire selon la revendication 16, **caractérisé en ce que** le tamis préliminaire comprend des ouvertures de tamis polygonales et possède un collet de bague qui s'enclenche dans le renfoncement intérieur du dispositif à plaques de dispersion circulaire.

18. Composant sanitaire selon l'une des revendications précédentes, **caractérisé en ce que** le tamis préliminaire, le dispositif à plaques de dispersion ainsi que le corps de douille comportent une section transversale circulaire.

19. Composant sanitaire selon l'une des revendications précédentes, **caractérisé en ce que** le corps de douille comprend un filetage extérieur, de sorte qu'il est possible de procéder à un vissage direct dans un filetage intérieur complémentaire d'une robinetterie d'écoulement, auquel cas une bague d'étanchéité prévue sur le corps de douille comprend un code, en particulier un code de couleurs pour définir le type de filetage et/ou le pas de filetage du filetage extérieur.

20. Procédé de fabrication d'un composant sanitaire, notamment un dispositif de régulation de jet ou de formation de jet pour milieux fluides en écoulement, se composant d'éléments spécifiques déterminant les propriétés agencés en sandwich dans le sens d'écoulement, ces éléments comprenant au moins un tamis préliminaire, un dispositif à plaques de dispersion ainsi qu'un corps de douille avec des segments comprenant des perforations de formation de jet situées sur sa surface de section transversale, dans lequel pour parvenir à être adaptés aux exigences les plus diverses d'application et de l'utilisateur, les éléments spécifiques déterminant les propriétés sont interchangeables et combinables et pour ce faire des moyens de fixation sont disposés sur ou dans le corps de douille et des moyens de fixation correspondants sont disposés sur le dispositif à plaques de dispersion, **caractérisé en ce que** le dispositif à plaques de dispersion comprend au moins à l'extérieur un codage optique spécifiant la catégorie de débit et le corps de douille comprend lui un codage optique spécifiant le type d'écoulement, c'est-à-dire laminaire ou enrichi en air, en outre le tamis préliminaire est relié au dispositif à plaques de dispersion, et dans le cas d'un régulateur de coefficient de débit placé entre le tamis préliminaire et le dispositif à plaques de dispersion, le tamis préliminaire est conçu de façon translucide ou transparente et le régulateur de coefficient de débit possède un autre codage optique, tandis que, en cas d'absence de régulateur de coefficient de débit, un codage optique du tamis préliminaire est conçu dans une combinaison prédéfinie ou de manière coïncidente avec celui du dispositif à plaques de dispersion, le codage des éléments spécifiques déterminant les propriétés étant tiré d'un tableau de codes en fonction des exigences spécifiques du client en ce qui concerne les catégories de débit souhaitées et la forme de jet et/ou le taux de débit, qui concordent avec les exigences spécifiques du client ou s'approchent le plus possible de celles-ci, afin de pouvoir exécuter le prélèvement des éléments à partir d'un stock et les assembler correctement et de manière contrôlée.

21. Procédé selon la revendication 20, **caractérisé en ce que** le contrôle de la fabrication ainsi que le contrôle qualité du composant sanitaire sont effectués à l'aide d'un enregistrement et d'un traitement d'images assisté par ordinateur, auquel cas on recourt pour les codes respectifs à des couleurs prédéfinies de température de couleur différente.

22. Utilisation d'un composant sanitaire, notamment un dispositif de régulation de jet ou de formation de jet pour milieux fluides d'écoulement, se composant d'éléments spécifiques déterminant les propriétés agencés en sandwich dans le sens d'écoulement, ces éléments comprenant au moins un tamis préliminaire, un dispositif à plaques de dispersion ainsi qu'un corps de douille avec des segments comprenant des perforations de formation de jet situées sur sa surface de section transversale, dans lequel pour parvenir à être adaptés aux exigences les plus diverses d'application et de l'utilisateur, les éléments spécifiques déterminant les propriétés sont interchangeables et combinables et pour ce faire des moyens de fixation sont disposés sur le pourtour intérieur du corps de douille et des moyens de fixation correspondants sont disposés sur le pourtour extérieur du dispositif à plaques de dispersion circulaire, le dispositif à plaques de dispersion circulaire comprenant au moins à l'extérieur un codage optique spécifiant la catégorie de débit et le corps de douille comprenant lui un codage optique spécifiant le type d'écoulement, c'est-à-dire laminaire ou enrichi en air, en outre le tamis préliminaire est inséré dans un ressaut intérieur du dispositif à plaques de dispersion circulaire, et dans le cas d'un régulateur de coefficient de débit placé entre le tamis préliminaire et le dispositif à plaques de dispersion, le tamis préliminaire étant conçu de façon translucide ou transparente et le régulateur de coefficient de débit possédant un autre codage optique, tandis que, en cas d'absence de régulateur de coefficient de débit, un codage optique du tamis préliminaire est conçu dans une combinaison prédéfinie ou de manière coïncidente avec celui du dispositif à plaques de dispersion,
à l'aide d'un tableau de codes, autorisé par le fabricant, qui indique quel codage optique des éléments reconnaissables sans démontage correspond au cas d'application respectif en ce qui concerne la forme de jet, la limitation du coefficient de débit et/ou la catégorie d'écoulement ou qui s'approche le plus de ce cas d'application.

23. Utilisation d'un composant sanitaire selon la revendication 22, **caractérisée en ce que** les codages sont réalisés comme des couleurs de température de couleur différente.
